Europäisches Patentamt

European Patent Office

Office européen des brevets

(19)

(11) Numéro de publication: **0 008 961**
**B1**

## FASCICULE DE BREVET EUROPEEN

(12)

(45) Date de publication du fascicule du brevet:
04.08.82

(21) Numéro de dépôt: 79400430.9

(22) Date de dépôt: 27.06.79

(51) Int. Cl.³: **C 08 J  7/04,** C 08 L  1/00,
**B 65 D  65/42**

(54) **Pellicule cellulosique enduite comportant des rugosités de surface et destinée à l'emballage de fromages à pâte molle. Procédé pour la réalisation.**

(30) Priorité: 07.07.78 FR 7820248

(43) Date de publication de la demande:
19.03.80 Bulletin 80/6

(45) Mention de la délivrance du brevet:
04.08.82 Bulletin 82/31

(84) Etats contractants désignés:
AT BE CH DE FR GB IT LU NL SE

(56) Documents cités:
**FR-A-1 065 675**
**FR-E-77 251**
**GB-A-424 250**
**NL-A-7 302 820**

(73) Titulaire: **RHONE-POULENC FILMS Société Anonyme,
22 Avenue Montaigne, F-75008 Paris (FR)**

(72) Inventeur: **De Leiris, Jean-Pierre, l, rue du Général de
Larminat, F-94000 Creteil (FR)**

(74) Mandataire: **Fichet, Edouard et al, RHONE POULENC
RECHERCHES Service Brevets Chimie et
Polymères 25, quai Paul Doumer, F-92408 Courbevoie
Cedex (FR)**

Pellicule cellulosique enduite comportant des rugosités de surface et destinée
à l'emballage de fromages à pâte molle. Procédé pour la réalisation.

La présente invention concerne l'emballage des fromages à pâte molle. Elle se rapporte plus particulièrement à une pellicule cellulosique recouverte d'un enduit, destinée à l'emballage des fromages à pâte molle.

On sait que les fromages à pâte molle (camembert, coulommier, brie, ...) sont des produits vivants qui, après leur emballage, doivent s'affiner correctement jusqu'à la consommation qui intervient parfois trente jours après l'emballage. Au cours de cet affinage, le fromage absorbe de l'oxygène et rejette du gaz carbonique. Par conséquent, les feuilles d'emballage, por ces produits, doivent posséder une perméabilité suffisante à ces deux gaz par que leur évolution dans le temps se fasse correctement.

Par ailleurs, ces formages sont des produits ayant une humidité assez importante: il est essentiel que l'emballage utilisé laisse passer la vapeur d'eau, afin d'éviter une condensation d'eau en surface et éviter la nécrose des moisissures. Mais il est nécessaire également que ce passage de vapeur d'eau soit contrôlé afin d'éviter le dessèchement du fromage.

D'une manière générale, l'évolution, dans le temps, d'un fromage à pâte molle dépend:

— de la composition initiale (qualité du lait),
— des conditions climatiques au moment de la fabrication,
— des conditions d'affinage (température, hygrométrie),
— des conditions de stockage,
— des échanges gazeux avec le milieu ambiant (après conditionnement) en particulier vapeur d'eau, oxygène, gaz carbonique, ammoniaque.
— des échanges thermiques.

Si le matériau utilisé est imperméable à la vapeur d'eau, il favorise la protéolyse, accélère donc le processus de dégradation qui peut aboutir à un produit inconsommable.

Un tel matériau peut également entraîner l'apparition de condensation d'eau en surface, et entraîner une nécrose de la flore microbienne.

Si le matériau utilisé est trop perméable, il entraîne une dessiccation en surface, un accroissement correlatif de la teneur en sel, une perte de poids, un affinage incomplet, et l'apparition d'une certaine concavité préjudiciable à l'aspect général. D'une manière générale, la perméabilité aux gaz revêt une grande importance quant à la qualité du produit fini. Le développement de la flore de surface (Pénicillium Caséicolum) est stimulé par l'oxygène, mais inhibé par le gaz carbonique et l'ammoniaque.

On utilise généralement pour l'emballage des fromages à pâte molle, soit du papier paraffiné, soit une pellicule cellulosique perforée, soit des matériaux complexes tels que pellicule cellulosique/papier paraffiné, papier surcouché/papier paraffiné, aluminium/papier cristal/papier paraffiné.

Parmi ces emballages connus, les complexes double papier sont les plus économiques, mais les complexes pellicule cellulosique/papier paraffiné donnent de meilleurs résultats du point de vue conservation, affinage et présentation du produit emballé.

Dans ces derniers complexes, le papier paraffiné est mis au contact du fromage et permet d'adsorber une partie de l'eau du fromage et de la désorber au travers de la pellicule cellulosique extérieure évitant ainsi des condensations de surface préjudiciables à la vie même du Pénicillium.

La pellicule cellulosique non enduite ou revêtue d'un enduit nitrocellulosique possède des coefficients de perméabilité à l'oxygène et au gaz carbonique, adaptés aux fromages à pâte molle.

Toutes les pellicules enduites d'un vernis autre que nitrocellulosique ont une perméabilité à la vapeur d'eau trop faible por être utilisables dans l'emballage des formages à pâte molle. Il est donc nécessaire, pour la conservation des fromages à pâte molle, d'utiliser des pellicules recouvertes d'un enduit nitrocellulosique. Toutefois, les pellicules revêtues d'un tel enduit disponibles dans le commerce, ont une perméabilité à la vapeur d'eau trop élevée et l'on a suggéré d'introduire de la paraffine dans l'enduit nitrocellulosique, et de perforer ladite pellicule, afin d'obtenir une perméabilité adaptée à chaque fromage.

Toutefois, on s'est rendu compte que, si une pellicule était plus simple et plus économique à réaliser, les fromages à pâte molle avaient une mauvaise évolution dans le temps par apparition de pourriture des moisissures en certains points de la croute dudit fromage, du fait d'une condensation de vapeur d'eau plus importante en certains points.

La pellicule cellulosique, selon l'invention, permet d'éviter ces inconvénients. A cet effet, elle est caractérisée en ce que l'enduit est constitué d'un vernis nitrocellulosique dans lequel sont dispersées des particules de caséine ou d'amidon de diamètre supérieur à l'épaisseur de l'enduit. La pellicule cellulosique selon l'invention a de préférence une perméabilité à la vapeur d'eau comprise entre 400 g/m2/h et 1 000 g/m2/h selon la norme ASTME 96.

On a en effet constaté que, de manière surprenante, l'incorporation de telles particules dans l'enduit nitrocellulosique permettait d'une part de ménager un faible espace entre la croute du fromage et la pellicule cellulosique de façon à faciliter la circulation de l'air et d'autre part, de régulariser le transfert de vapeur d'eau vers le milieu extérieur.

En effet, la caséine et l'amidon possèdent la propriété d'être des particules organiques qui sont non seulement de qualité alimentaire, mais qui adsorbent également la vapeur d'eau issue du fromage et la répartissent de façon homogène sur toute la pellicule. L'échange de vapeur d'eau avec le milieu ambiant s'effectuant régulièrement en tout point de la surface de la pellicule, on évite ainsi une condensation d'eau préjudiciable au développement harmonieux du Pénicillium, donc à une bonne maturation du fromage.

On choisira, de préférence, des particules d'amidon (de riz, de blé, de maïs, . . .) ou de caséïne ayant un diamètre moyen de 5 à 20 µm. Le procédé de préparation des particules d'amidon est bien connu de l'homme de l'art. On sait, en particulier, que chaque type d'amidon (de riz, de blé, de maïs, . . .) a une forme et un diamètre de particules assez caractéristiques de la molécule utilisée. Suivant le but à atteindre, l'homme de l'art choisira, de préférence, l'une de ces variétés de particules.

Le procédé de préparation de la caséïne est également bien connu de l'homme de l'art: il consiste à coaguler le lait en milieu acide, puis à laver et sécher le solide obtenu, qui est ensuite broyé. Les particules obtenues, de diamètres très différents, sont ensuite tamisées.

La proportion de particules dans le vernis sera comprise entre 2% et 10% en poids, et de préférence entre 4% et 8% en poids. La Demanderesse a obtenu les meilleurs résultats aux environs de 6% en poids de particules dans le vernis.

Pour faciliter la fabrication d'une telle pellicule, on choisira de préférence une pellicule cellulosique du commerce, déjà revêtue d'une couche d'enduit nitrocellulosique, dont le support a une perméabilité selon la norme ASTM E 96 sera supérieure ou égale à 1.000 g/m2/24 h.

Afin de donner à ladite pellicule un aspect attrayant, il est nécessaire de prévoir une impression polychrome sur ladite pellicule. Dans ce but, la pellicule, selon l'invention, peut comporter une telle impression, disposée entre le support en pellicule cellulosique (enduit ou non enduit au préalable) et la couche de vernis nitrocellulosique comportant lesdites particules. De cette façon, l'impression est protégée du contact extérieur par la pellicule et du contact du fromage par le vernis.

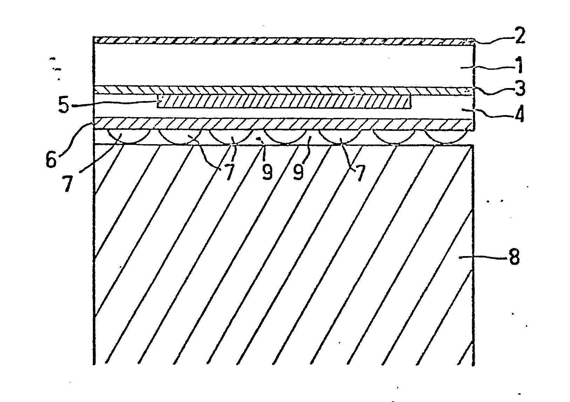

Pour l'impression, on choisira de préférence, des encres nitrocellulosiques ou des encres polyamides bien connues de l'homme de l'art. Pour améliorer la qualité optique de cette impression polychrome, on peut réaliser une seconde impression uniforme (blanche ou de couleur) sur la première impression et sous la couche de vernis nitrocellulosique contenant lesdites particules. Cette seconde impression polychrome sera également à base d'encre nitrocellulosique ou polyamide et contiendra, par exemple, des particules de silice alumine, ou de préférence de bioxyde de titane. Ces impressions successives, à base d'encre nitrocellulosique, permettent, de plus, de contrôler la perméabilité de la pellicule enduite. De façon connue en soi, l'enduit nitrocellulosique peut contenir toutes sortes d'additifs, tels que des plastifiants non toxiques (phtalate de butyle, dioctyl phtalate, ester de pentaérythrite, etc . . .). L'invention sera mieux comprise à l'aide de l'exemple de réalisation suivant, donné à titre non limitatif, conjointement avec la figure unique qui représente une coupe de la pellicule selon l'invention.

Sur cette figure, une pellicule cellulosique I est revêtue rectoverso d'une couche de vernis nitrocellulosique 2 et 3.

Une impression polychrome 5 est réalisée sur la couche 3 et recouverte uniformément d'une couche opacifiante 4, sur laquelle est déposée une couche de vernis nitrocellulosique 6 dans laquelle sont dispersées des particules de caséïne ou d'amidon 7, lesdites particules étant au contact du fromage 8. On remarque les intervalles 9 entre deux particules successives 7, dans lesquels l'air peut circuler.

### Exemple

Sur une pellicule cellulosique CELLOPHANE 330 LMS 50 (marque déposée), d'un poids moyen de 33 g/m2, revêtue d'une couche de vernis nitrocellulosique de 1 µm d'épaisseur, on réalise en reprise une impression hélio à l'aide d'encres polychromes nitrocellulosiques, telles que celles vendues par la Société LORILLEUX International sous la dénomination commerciale STILLETO. Après évaporation du solvant, on enduit une encre blanche telle que décrite ci-dessus sur toute la surface de la pellicule (poids déposé 1,5 g/m2).

On réalise ensuite la solution suivante:
— nitrocellulose (extrait sec)　　　　60 g
— phtalate de butyle　　　　　　　　30 g
— ester de pentaérythrite de
　colophane polymérisée　　　　　　10 g
— acétate d'éthyle　　　　　　　　　400 g

On disperse ensuite dans cette solution 4 g de caséïne technique (diamètre moyen de particules 10 µm), vendue par la Société PROLABO.

On enduit à raison de 2 g/m2 environ cette dispersion sur la couche d'encre blanche. On obtient une perméabilité dans les conditions tropicales d'environ 600 g/m2/24 h (norme ASTM E 96).

Les fromages emballés avec cette pellicule ont été dégustés plusieurs jours après stockage dans leur emballage. Aux tests de dégustation, dans lesquels on compare des fromages de même origine, emballés dans différents emballages, les fromages emballés dans les emballages selon l'invention ont obtenu les meilleures notes.

## Revendications

1. Pellicule cellulosique pour l'emballage de fromages à pâte molle, constituée d'un support en pellicule cellulosique revêtue d'une couche d'enduit, caractérisée en ce que l'enduit est constitué d'un vernis nitrocellulsique dans lequel sont dispersées des particules de caséïne ou d'amidon de diamètre supérieur à l'épaisseur de l'enduit.

2. Pellicule cellulosique selon la revendication 1, caractérisée en ce que le diamètre des particules est compris entre 5 et 20 μm.

3. Pellicule cellulosique selon l'une des revendications 1 ou 2, caractérisée en ce qu'elle a une perméabilité à la vapeur d'eau comprise entre 400 g/m2/24 h et 1.000 g/m2/24 h, mesurée dans les conditions tropicales.

4. Pellicule cellulosique selon l'une des revendications 1 à 3, caractérisée en ce que le support a une perméabilité à la vapeur d'eau supérieure, ou égale, à 1.000 g/m2/24 h mesurée dans les conditions tropicales.

5. Pellicule cellulosique selon l'une des revendications 1 à 4, caractérisée en ce qu'une impression, à l'aide d'une encre nitrocellulosique ou polyamide, est réalisée sur le support, avant l'enduction de l'enduit nitrocellulosique.

6. Pellicule cellulosique selon la revendication 5, caractérisée en ce que l'impression est revêtue d'un enduit opaque blanc ou coloré, constitué d'une encre nitrocellulosique ou polyamide et d'un pigment.

7. Pellicule cellulosique selon la revendication 6, caractérisée en ce que le pigment est choisi parmi le bioxyde de titane, la silice ou l'alumine.

8. Pellicule cellulosique selon l'une des revendications 1 à 7, caractérisée en ce que le support en pellicule cellulosique est préalablement enduit recto-verso d'une mince couche de vernis nitrocellulosique.

9. Pellicule cellulosique selon l'une des revendications 1 à 8, caractérisée en ce que l'enduit comporte de 2% à 10% en poids de particules d'amidon et/ou de caséïne.

10. Pellicule cellulosique selon la revendication 9, caractérisée en ce que l'enduit comporte de 4% à 8% en poids, et de préférence environ 6% en poids, de particules d'amidon et/ou de caséïne.

11. Procédé pour la réalisation d'une pellicule cellulosique destinée à l'emballage de fromages à pâte molle, consistant à dérouler une pellicule cellulosique enduite ou non enduite, de perméabilité à la vapeur d'eau mesurée dans les conditions tropicales supérieure ou égale à 1.000 g/m2/24 h, à imprimer en héliogravure un motif, à enduire sur ce motif une couche opaque blanche ou de couleur, puis à enduire une surcouche d'enduit nitrocellulosique, contenant des particules de caséïne ou d'amidon, de diamètre moyen compris entre 5 et 20 μm, afin d'obtenir une pellicule cellulosique de perméabilité à la vapeur d'eau, mesurée dans les conditions tropicales, supérieure à 400 g/m2/24 h.

## Patentansprüche

1. Cellulosefilm zur Verpackung von Weichkäsen, bestehend aus einem Träger aus Cellulosefilm überzogen mit einer Überzugsschicht, dadurch gekennzeichnet, daß der Überzug aus einem Nitrocelluloselack bzw. -film besteht, in dem Teilchen von Kasein oder Stärke mit einem Druchmesser größer als die Dicke des Überzugs dispergiert sind.

2. Cellulosefilm gemäß Anspruch 1, dadurch gekennzeichnet, daß der Durchmesser der Teilchen zwischen 5 und 20 μm beträgt.

3. Cellulosefilm gemäß einem der Ansprüche 1 oder 2, dadurch gekennzeichnet, daß er eine Durchlässigkeit für Wasserdampf zwischen 400 g/m²/24 h und 1000 g/m²/24 h, gemessen unter tropischen Bedingungen, hat.

4. Cellulosefilm gemäß einem der Ansprüche 1 bis 3, dadurch gekennzeichnet, daß der Träger eine Durchlässigkeit für Wasserdampf größer oder gleich 1000 g/m²/24 h, gemessen unter tropischen Bedingungen, hat.

5. Cellulosefilm gemäß einem der Ansprüche 1 bis 4, dadurch gekennzeichnet, daß mittels einer Nitrocellulose- oder Polyamidtinte bzw. -druckfarbe auf dem Träger vor dem Überziehen der Nitrocelluloseschicht ein Bedrucken bewirkt wird.

6. Cellulosefilm gemäß Anspruch 5, dadurch gekennzeichnet, daß der Druck mit einem opaken weißen oder gefärbten Überzug überzogen wird, der aus einer Nitrocellulose- oder Polyamidtinte und einem Pigment besteht.

7. Cellulosefilm gemäß Anspruch 6, dadurch gekennzeichnet, daß das Pigment ausgewählt ist unter Titandioxyd, Siliciumdioxyd oder Aluminiumoxyd.

8. Cellulosefilm gemäß einem der Ansprüche 1 bis 7, dadurch gekennzeichnet, daß der Träger aus Cellulosefilm vorher auf der Vorderseite und der Rückseite mit einer dünnen Schicht von Nitrocelluloselack überzogen wird.

9. Cellulosefilm nach einem der Ansprüche 1 bis 8, dadurch gekennzeichnet, daß der Überzug 2 bis 10 Gew.-% Teilchen von Stärke und/oder Kasein umfaßt.

10. Cellulosefilm gemäß Anspruch 9, dadurch gekennzeichnet, daß der Überzug 4 bis 8 Gew.-%, vorzugsweise etwa 6 Gew.-% Teilchen von Stärke und/oder Kasein enthält.

11. Verfahren zur Herstellung eines Cellulosefilms, der zur Verpackung von Weichkäsen bestimmt ist, darin bestehend, daß ein beschichteter oder nicht beschichteter Cellulosefilm mit einer Durchlässigkeit für Wasserdampf, gemessen unter tropischen Bedingungen, von größer oder gleich 1000 g/m²/24 h abgewickelt wird, daß ein Motiv im Tiefdruck aufgedruckt wird, daß auf dieses Motiv eine opake weiße oder farbige Schicht aufgetragen wird, daß dann eine Überschicht eines Nitrocelluloseüberzugs aufgetragen wird, der Teilchen von Kasein oder Stärke mit einem mittleren Durchmesser zwischen 5 und 20 µm enthält, damit ein Cellulosefilm mit einer Durchlässigkeit für Wasserdampf, gemessen unter tropischen Bedingungen, von höher als 400 g/m²/24 h erhalten wird.

## Claims

1. Cellulose film for packaging soft cheeses, consisting of a base of cellulose film covered with a coating, characterised in that the coating comprises a nitrocellulose varnish in which particles of casein or of starch having a diameter which is greater than the thickness of the coating are dispersed.

2. Cellulose film according to Claim 1, characterised in that the diameter of the particles is between 5 and 20 µm.

3. Cellulose film according to one of Claims 1 or 2, characterised in that is has a permeability to water vapour of between 400 g/m²/24 hours and 1,000 g/m²/24 hours, measured under tropical conditions.

4. Cellulose film according to one of Claims 1 to 3, characterised in that the base has a permeability to water vapour which is greater than or equal to 1,000 g/m²/24 hours, measured under tropical conditions.

5. Cellulose film, according to one of Claims 1 to 4, characterised in that a print is made on the base, using a nitrocellulose or polyamide ink, before the application of the nitrocellulose coating.

6. Cellulose film according to Claim 5, characterised in that the print is covered with a white or coloured, opaque coating consisting of a nitrocellulose or polyamide ink and a pigment.

7. Cellulose film according to Claim 6, characterised in that the pigment is chosen from amongst titanium dioxide, silica or alumina.

8. Cellulose film according to one of Claims 1 to 7, characterised in that the base of cellulose film is coatet beforehand, on both sides, with a thin layer of nitrocellulose varnish.

9. Cellulose film according to one of Claims 1 to 8, characterised in that the coating contains form 2% to 10% by weight of particles of starch and/or of casein.

10. Cellulose film according to Claim 9, characterised in that the coating contains from 4% to 8% by weight, and preferably about 6% by weight, of particles of starch and/or of casein.

11. Process for the production of a cellulose film intended for packaging soft cheeses, which comprises unrolling a coated or uncoated cellulose film having a permeability to water vapour which is greater than or equal to 1,000 g/m²/24 hours, measured under tropical conditions, printing a design by photogravure, coating a white or coloured, opaque layer onto this design, and then applying a top layer of nitrocellulose coating, containing particles of casein or of starch having an average diameter of between 5 and 20 µm, in order to obtain a cellulose film having a permeability to water vapour which is greater than 400 g/m²/24 hours, measured under tropical conditions.